# EUROPEAN PATENT SPECIFICATION

(11) **EP 2 564 061 B1**
(45) Date of publication and mention of the grant of the patent: **22.03.2017**
(21) Application number: 10765940.1
(22) Date of filing: 06.09.2010
(51) Int. Cl.: F03D 1/04

(54) **WINDMILL DRIVEN ENERGY CONVERTING DEVICE**
WINDMÜHLENBETRIEBENE ENERGIEUMWANDLUNGSVORRICHTUNG
DISPOSITIF CONVERTISSEUR D'ÉNERGIE ENTRAÎNÉ ÉOLIENNE

(30) Priority: 09.09.2009 DK 200901011
(43) Date of publication of application: 06.03.2013
(73) Proprietor: Nordic Wind ApS, 8370 Hadsten (DK)
(72) Inventor: PEDERSEN, Alfred, Lisbjerg, DK-8850 Bjerringbro (DK)
(74) Representative: Rottenberg, Annabell Simone
(86) International application number: PCT/DK2010/000122
(87) International publication number: WO 2011/029445

(56) References cited:
- WO-A1-2006/010377
- DE-A1- 3 008 327
- FR-A1- 2 500 078
- JP-A- 59 212 576
- US-A- 4 486 638
- US-A1- 2005 201 862

## Description

### Field of the Invention

The present invention generally relates to a device for converting wind energy to heat or electricity. The invention more particularly relates to pitch regulating means for a device for converting wind energy to heat or electricity. In a preferred embodiment of the present invention the device is configured to convert wind energy to heat through generation of eddy currents and the device is equipped with special pitch regulation means that are self regulating.

### Background of the Invention

It is known to produce heat directly from wind energy. US 4 421 967 discloses a windmill having a drive shaft which is coupled to an eddy current heater. The eddy current heater has a rotor coupled to the drive shaft, a stator, and means for exciting magnetic fields between the rotor and stator. As the drive shaft rotates the rotor with respect to the stator, eddy currents and thus heat are generated as a function of the magnetic flux density and the relative speed between the rotor and the stator.

US 4 486 638 discloses a device for converting heat directly from rotational energy. The device consists of a multi-polar rotor with permanent magnets, of a stator having an electrically conducting wall subjected to the magnetic induction generated by the rotation of the permanent magnets and thus producing a resistant couple by generation of eddy currents. The device also consists of a heat exchanger, wherein said heat-carrying fluid circuit is formed within the stator by said electrically conducting wall.

Several pitch regulation methods have been disclosed. However, there is need for a simple and reliable pitch regulation method that is self regulation, reliable and secure even at extreme wind conditions.

### Object of the Invention

It is an object for the present invention to specify a self regulation, reliable and secure pitch regulation method for a device for converting wind energy to heat and/or electricity.

### Description of the Invention

These and other objects and advantages of the present invention will be apparent from the following description and the appended claims. It will be recognized that the foregoing description is not intended to list all of the features and advantages of the invention. Various embodiments of the inventions will satisfy various combinations of the objects of the invention and some embodiments of the invention will provide fewer than all of the listed features and satisfy fewer than all the listed objectives.

The objects of the present invention can be accomplished by a device as described in the introductory part of claim 1 that is characteristic in that that the energy converting device comprises means for changing the axial position of the electrically conducting wall relative to the rotor and that the energy converting device comprises means for regulating the pitch of the blades, where the regulation of the pitch of each blade is accomplished by: 1) using at least one spring member arranged in a chamber provided in the hub to provide a force towards a force transferring member configured to transfer force from the spring member to an eccentric member that is mechanically connected to the blade shaft of the blade and configured to press the force transferring member towards the at least one spring member and that the eccentric member is configured to rotate about longitudinal axis of the blade shaft so that the wind induced forces that acts on the blade causes the blade to pitch in a manner that causes the eccentric member to push against and move the force transferring member towards the at least one spring member; 2) using electrical means configured to provide a force that causes that the blade is pitched or 3) using a hydraulic means configured to provide a force that causes that the blade is pitched.

This solution represents a very simple and reliable regulation mechanism. The spring members solution is chosen the eccentric member may advantageously be selected with the purpose of securing a long life time of the means for regulating the pitch of the blades. Hereby a very secure and reliable construction can be achieved.

By spring member is meant any member capable of providing a force when being deformed. It may be any resilient member such as an elastomer or any type of spring.

In one embodiment of the invention the means for regulating the pitch of the blades consists of an eccentric member having a basically arced and conical geometry that secures a smooth movement of the force transferring member when the blades are pitched and the eccentric member accordingly is turned and moves the force transferring member. Hereby it is achieved that the pitch regulation can be carried out automatically in a smooth manner.

In another embodiment of the invention the eccentric member and the at least one spring member is configured to cooperate in a manner that secures that the blades are pitched in a desired range according to wind pressure. This can be accomplished by choosing the right spring characteristics and the right geometry of the eccentric member.

In a preferred embodiment of the invention the means for regulating the pitch of the blades consists of an oil pump configured to generate a hydraulic pressure that regulates pitch of the blades on the basis of at least one preselected and measured parameter. A useful parameter would be the rotational speed of the blades. The rotational speed of the blades may be measured in several ways. The pump may be driven mechanically merely by the pressure build up during rotation of the oil container. It may also be possible to use an electrically driven oil pump. Hereby a simple and reliable pitch regulation method can be implemented.

In another embodiment of the invention the means for regulating the pitch of the blades consists of an electrical actuator configured to pitch the blades on the basis of at least one preselected and measured parameter. A useful parameter would be the rotational speed of the blades. The rotational speed of the blades may be measured in several ways by means e.g. by using various types of sensors. The electrical actuator may be powered by a battery that store electrical energy generated by a generator that is driven by the shaft. It is possible to apply an electrical control system. This would allow for a very reliable pitch regulation method with many features.

In a preferred embodiment according to the invention the spring member is configured to move and provide a force along a line being parallel to the shaft of the energy converting device.

In another preferred embodiment according to the invention the hub of the blades is arranged symmetrically about and on the distal end of the shaft of the energy converting device. This provides a simple and reliable construction of the energy converting device.

In a particular preferred embodiment according to the invention energy converting device comprises a rotatable mounted wind guide that is configured to change its orientation according to the wind direction and that wind guide is configured to guide the wind from a first direction H being basically perpendicular to the longitudinal axis of the shaft to a second direction V being basically parallel to the longitudinal axis of the shaft.

Herby it can be achieved that the wind guide can guide the wind independently on the wind direction and thus the loss of efficiency will be minimised compared with the prior art the wind guides that are fixed and restricted from rotation. Therefore, a higher amount of the kinetic energy of the wind can be used to generate heat by the energy converting device.

In one embodiment according to the invention the wind guide comprises a wind inlet opening with an area Aᵢ and a wind outlet opening with an area Aₒ, where Aᵢ/Aₒ is greater than 1. Hereby it is achieved that the wind is accelerated along its way through the wind guide because the wind flows through a duct having a gradually reduced cross sectional area. Therefore, the wind velocity and thus the air pressure is increased and less turbulence will be generated at back side of the blades. Accordingly, the overall efficiency of the energy converting device may be increased considerably.

In a preferred embodiment according to the invention Aᵢ/Aₒ is greater than 2, preferable Aᵢ/Aₒ is greater than 2 and less than 5. Hereby the overall efficiency may be increased even more.

In another preferred embodiment according to the invention the blades are fixed to the inner side of a blade ring. Hereby it is achieved that the noise from the blades can be significantly reduced. Furthermore, the efficiency of the energy converting device can be increased. The low level of noise makes it possible to install the energy converting device close to house holds e.g. on a roof of a building such as a domestic building.

In yet another preferred embodiment according to the invention the energy converting device comprises a number of outer support members extending along the outer side of the energy converting device so that a blade ring can be fixed to these outer support members. The support members may by way of example be rods or longitudinal tubular bodies extending along the outer side of the energy converting device. Such construction secures a firm attachment of the blade ring.

In an embodiment according to the invention the wind guide is attached to a first bearing that is fixed to the shaft and the hub of the blades is attached to a second bearing that is fixed to the shaft in the top area of the wind guide and a third bearing is attached to the shaft above the second bearing so that the third bearing is attached to the blade ring. This construction secures that a very robust and strong mounting of the shaft. The use of several bearings makes it possible to apply a thinner and less rigid shaft.

In a preferred embodiment according to the invention the energy converting device comprises means for changing the axial position of the electrically conducting wall relative to the rotor. The axial position of the electrically conducting wall determines degree of magnetic induction generated by the rotation of the permanent magnets. That means that the axial position of the electrically conducting wall determines the generated resistance by generation of eddy currents. In other words, by changing the axial position of the electrically conducting wall relative to the rotor it is possible to control the mechanical resistance. The axial position of the electrically conducting wall relative to the rotor can be changed by various means. It is, by way of example, possible to use an electrical actuator or a hydraulic actuator that may be activated according to the rotational speed of the rotor. The pressure generated due to the centrifugal force that arise when e.g. the fluid that surrounds the electrically conducting wall may be used to change the axial position of the electrically conducting wall relative to the rotor. Hereby it is achieved that the start moment of the windmill can be lowered so that an easy start up can be achieved. Moreover, heat can be produced at low wind speeds and furthermore, it is possible to keep the rotational speed inside a desired range and the level of noise made by the windmill can be reduced due to the fact that the speed of the windmill can be reduced by increasing the resistance of the stator. In combination with appropriate pitch regulating means it would be possible to control the speed of the windmill in a specific range e.g. 20-40 rpm.

By changing the axial position of the electrically conducting wall relative to the rotor it is possible to control the mechanical resistance to the shaft. The resistance is proportional to the rotational speed. This resistance caused that the wind induced force towards the blades increases and hence the pitch regulation will occur.

In one embodiment of the invention a gear is arranged in the heat-carrying fluid of the heat exchanger. Hereby it can be achieved that heat generated by the friction in the gear is utilised and used so that the overall efficiency of the energy converting device is increased. Moreover, in a preferred embodiment of the invention the heat-carrying fluid is configured to lubricate the gear. The fluid may e.g. be appropriate oil.

In a preferred embodiment according to the invention the energy converting device is configured to be mounted on a roof of a building in a manner where the device is arranged in a pipe-like member so that the blades can not be seen. The wind is guided through the pipe-like member by using the rotable mounted wind guide.

In a preferred embodiment according to the invention the wind guide is rotable mounted so that it is free to rotate in both direction of rotation.

The invention is not limited to the described embodiments which can be modified in many ways. This applies in particular to the shape and the materials of the blades, the shaft and wind guide.

### Description of the Drawing

Preferred embodiments of the present invention will now be more particularly described, by way of example, with reference to the accompanying drawing, wherein:
- Fig. 1: is a cross sectional view of the pitch regulating means according to one preferred embodiment of the invention;
- Fig. 2: is a cross sectional view of the pitch regulating means shown in Fig. 1, however; in another blade position;
- Fig. 3: shows a cross sectional view of one embodiment of the energy converting device according to the invention;
- Fig. 4: shows another cross sectional view of the embodiment shown in Fig. 3;
- Fig. 5: shows a perspective view of one embodiment of the energy converting device according to the invention;
- Fig. 6a: shows a perspective view of the electrically conducting wall in a position where the electrically conducting wall encloses the lower part of the rotor;
- Fig. 6b: shows a perspective view of the electrically conducting wall in a position where the electrically conducting wall encloses the rotor completely;
- Fig. 7: is a top view of the electrically conducting wall enclosing the rotor;

### Detailed Description of the Invention

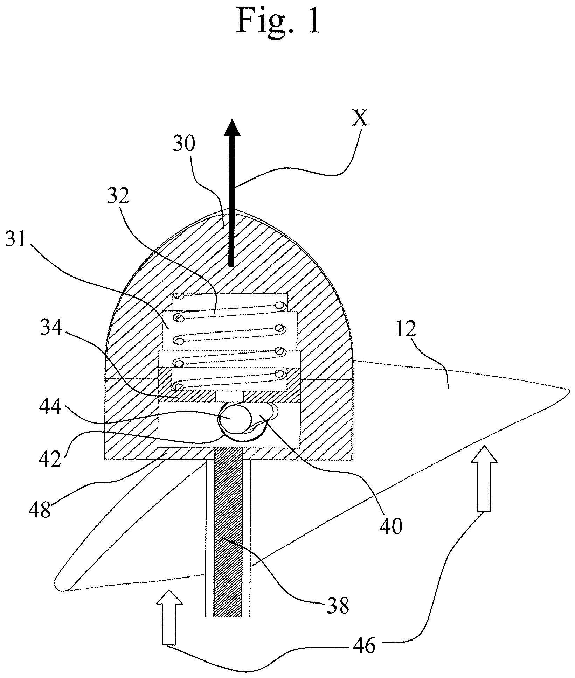

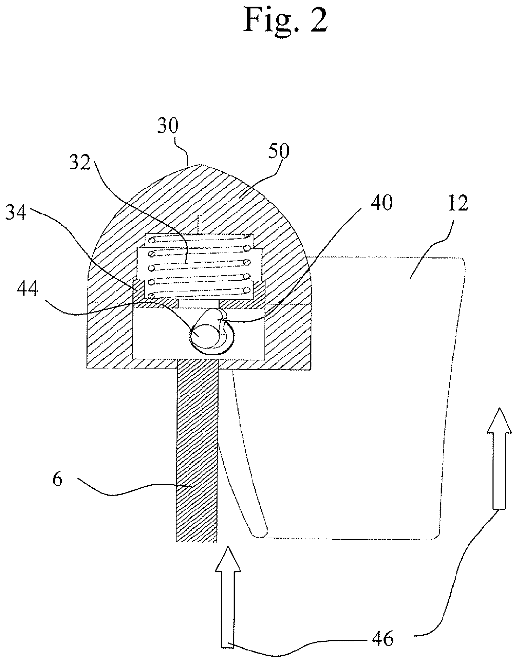

Fig. 1 illustrates one preferred embodiment according to the present invention. A number of blades 12 are arranged symmetrically about the axis X in the blade hub 30, however; only one blade 12 is shown in Fig. 1. In a preferred embodiment according to the invention the energy converting device 2 would have at least three blades 12. A chamber 31 is provided in the hub 30 and a spring member 32 is arranged in the chamber 31. A force transferring member 34 configured to transfer force from the spring member 32 to an eccentric member 40. The eccentric member 40 is connected to each blade 12 via a corresponding blade shaft 44 and each blade 12 is capable of rotating about its longitudinal axis that extends basically parallel to the blade shaft 44. This rotation is also referred to as pitching. The pitch of the blade 12 is influenced by the force from the spring member 32 and from the wind induced forces. Under operation a state of equilibrium will occur regarding the forces that influence the blades 12. In Fig. 1 the wind induced forces arise from relatively low wind speeds 46. Under these conditions the spring force will be dominating and the force transferring member 34 will be pushed close to the bottom end 48 of the hub 30. The eccentric member 40 will due to the wind induced forces push against the force transferring member 34. The spring member 32 will push the force transferring member 34 towards the bottom end 48 of the hub 30 and the wind will rotate the blade 12 counter clock wise (with reference to Fig. 1 and Fig. 2) about the blade shaft 44. The rotation of the blade 12 will turn the eccentric member 40 so that it will push force transferring member 34 towards spring member 32. The more the spring member 32 is pressed together the more (higher force) the spring member 32 will push against the force transferring member 34. The force transferring member 34 will move until a state of equilibrium occurs.

In Fig. 2 the wind induced forces arise from relatively high wind speeds 46. Under these conditions the wind induced forces will be dominating and the force transferring member 34 will be pushed towards the spring member 32. The eccentric member 40 will due to the high wind induced forces push against the force transferring member 34 with a relative high force. Accordingly, the force transferring member 34 will move towards the top end 50 of the hub 32. The shaft 6 of the energy converting device 2 is connected to the bottom end 48 of the hub 30.

In Fig. 1 and Fig. 2 only one blade 12 is shown. In a preferred embodiment of the invention the energy converting device 2 is equipped with at least three blades 12. All blades 12 are preferable mechanically connected to the same force transferring member 34 as illustrated in Fig. 1 and Fig. 2. This means that each blade 12 is connected to the hub 30 via a corresponding blade shaft 44. There is only required one spring member 32 in the hub 30 and this spring member 32 pushes against the common force transferring member 34 that is configured to pitch all blades 12 at the same time.

It is also possible to perform the pitch regulation by using an alternative to the spring member 32. By way of example it is possible to use an electrical actuator (e.g. a magnetic regulator) or a hydraulic regulator based on e.g. pressurised oil. However, in a preferred embodiment the spring member 32 is used to perform the pitch regulation. This construction is a simple and reliable mechanical solution.

In Fig. 1 the speed of the wind 46 is relatively low and the force transferring member 34 is pushed towards the bottom end 48 of the hub 30 where it has its lowest position. In this position the blades 12 are adapted to develop as much energy as possible from the wind. In Fig. 2, however; the speed 46 of the wind is very high and the blades are highly pitched because the wind pressure forces the blades to pitch due to the fact that the wind causes a rotation of the blade 12 so that the eccentric member 40 rotates and pushes the force transferring member 34 towards spring member 32 with a higher force that is provided from the spring member 32 towards the force transferring member 34.

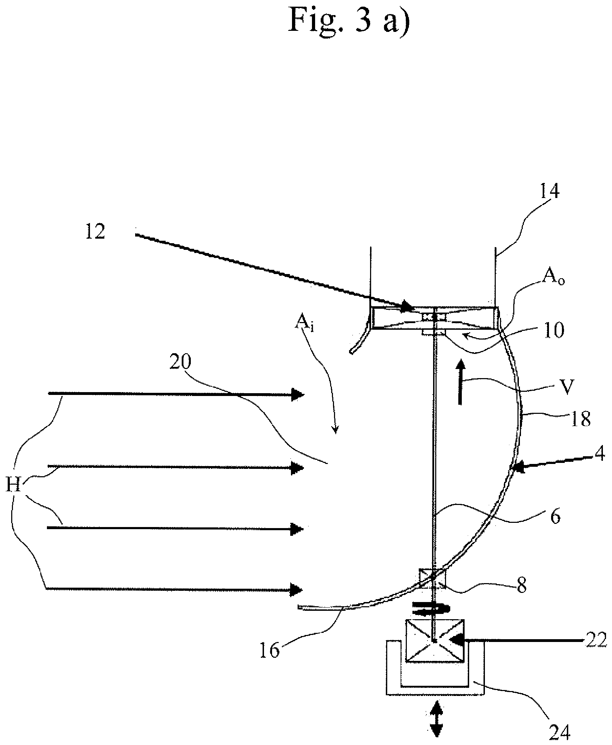

Fig. 3a illustrates a cross sectional view of one embodiment of the wind guide 4 according to the invention. The wind guide 4 is rotable mounted to a shaft 6 via a first bearing 8. A second bearing 10 located at the hub 11 of the blades 12 is attached to the shaft 6 in the top area of the wind guide 4 and a third bearing (not shown) is attached to the shaft 6 above the second bearing 10 so that the third bearing is attached to the blade ring 14. This construction secures that a very robust and strong mounting of the shaft 6. The use of several bearings 8, 10 makes it possible to apply a thin shaft 6.

It can be seen that the wind guide 4 is configured to change its orientation according to the wind direction and it can guide the wind from a first direction H basically perpendicular to the longitudinal axis of the shaft 6 to a second direction V basically parallel to the longitudinal axis of the shaft 6. The wind guide 4 has a bottom surface member 16 extending basically perpendicular to the longitudinal axis of the shaft 6. Thus the bottom surface member 16 is basically parallel to the first direction H. The wind guide 4 also has an arced top member 18 with a narrowing. The top member 18 extends basically parallel to the second direction V. When the wind enters the wind guide 4 in the inlet opening 20 it has a direction basically corresponding to the first direction H. However, the J-shaped inner geometry of wind guide 4 changes the direction of the wind so that the wind has a direction basically corresponding to the second direction V when the wind passes the blades 12. The cross sectional area Aᵢ of the wind inlet opening 20 is rather large compared with the wind outlet opening cross sectional area Aₒ. In fact is can be seen from Fig. 1 that Aᵢ/Aₒ is greater than 1.

Below the first bearing 8 the shaft 6 is attached to a rotor 22 that is enclosed by an electrically conducting wall 24 arranged in a stator (not shown). The electrically conducting wall 24 is configured to be displaced axially relative to the rotor 22. The displacement of the electrically conducting wall 24 relative to the rotor 22 can be provided e.g. by means of an electrical actuator or by any other suitable means.

When a poled magnet field passes an electrically conducting material such as an electrically conducting wall 24 or a coil an opposing magnetic field is generated. This magnetic field is proportional to the square of the rotational speed and the square of the diameter of the coil or the electrically conducting wall 24.

The rotor 22 being enclosed by an electrically conducting wall 24 is used to generate heat based on the magnetic induction generated by the rotation of the permanent magnets. The axial position of the electrically conducting wall 24 relative to the rotor 22 determines degree of magnetic induction generated by the rotation of the permanent magnets 28. Therefore, the axial position of the electrically conducting wall 24 determines the generated resistance by generation of eddy currents and thus, by changing the axial position of the electrically conducting wall 24 relative to the rotor 22 it is possible to control the mechanical resistance. Therefore, it is possible to control the rotational speed of the rotor 22 by changing the axial position of the electrically conducting wall 24 relative to the rotor 22. This mechanism can be used to protect the energy converting device 2 in case of extreme conditions (heavy wind by way of example). A control can be done in many ways and can be carried out by a man skilled in the art.

It is also possible to have a generator (not shown) coupled to the shaft 6. In this way it is possible to generate electricity. In one embodiment according to the invention the shaft 6 is connected to both a generator and a heat generating member (e.g. a rotor 22 enclosed by an electrically conducting wall 24). Hereby it is achieved that both electricity and heat can be generated. Moreover the generated electricity may be stored in a battery or used to drive electrical devices e.g. a pump for circulating a fluid, an electrical actuator, valves or any other electrical device.

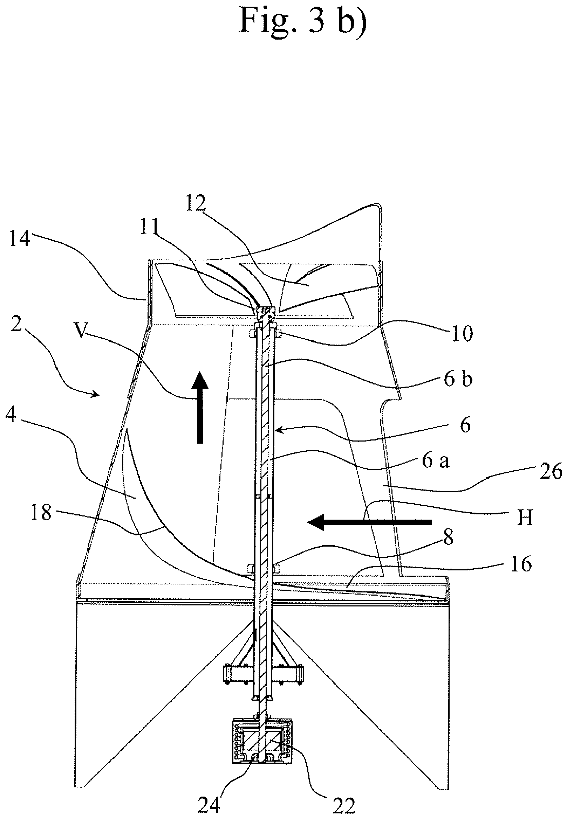

In Fig. 3b the wind guide 4 is arranged in an energy converting device 2 according to the invention. The blades 12 are arranged in the top of the energy converting device 2 and the blades are attached to the shaft 6 via a hob 11. The wind guide 4 is attached to the shaft 6 via the first bearing 8 in the bottom part of the energy converting device 2 and the second bearing 10 provided in the top part of the energy converting device 2 just below the hob 11 of the blades 12. The shaft 6 comprises a through going inner part 6a enclosed by an outer part 6b extending almost along the entire length of the inner part 6a of the shaft 6. In both ends of the shaft 6 the inner part 6a of the shaft 6 extends beyond the outer part 6b of the shaft 6. In the upper end of the shaft 6, the inner part 6a of the shaft 6 is attached to the hob 11 of the blades 12 and in the lower end of the shaft 6 the inner part 6a of the shaft 6 is attached to the rotor 22. A bottom bearing 24 is provided below the rotor 22.

In operation the wind that enters the energy converting device 2 has a direction H and this direction H is maintained during winds passage of the bottom surface member 16 of the wind guide 4, however; the wind direction is changed as the wind passes the arced top member 18 of the wind guide 4. The wind is directed along the vertical direction V. The blade ring 14 is attached to the outer support members 26 extending from the bottom part to the top part of the energy converting device 2.

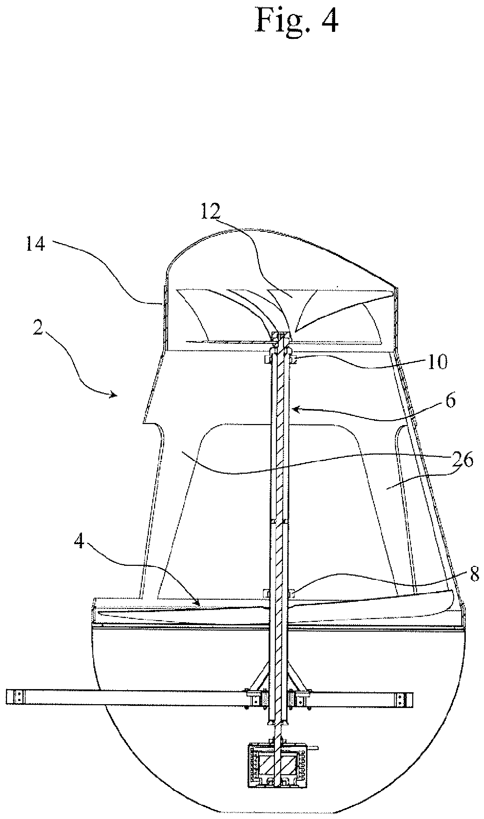

Fig. 4 shows the same embodiment as illustrated in Fig. 3b, however; from another cross sectional view. Two outer support members 26 are visible and only the flat part of the wind guide 4 is visible.

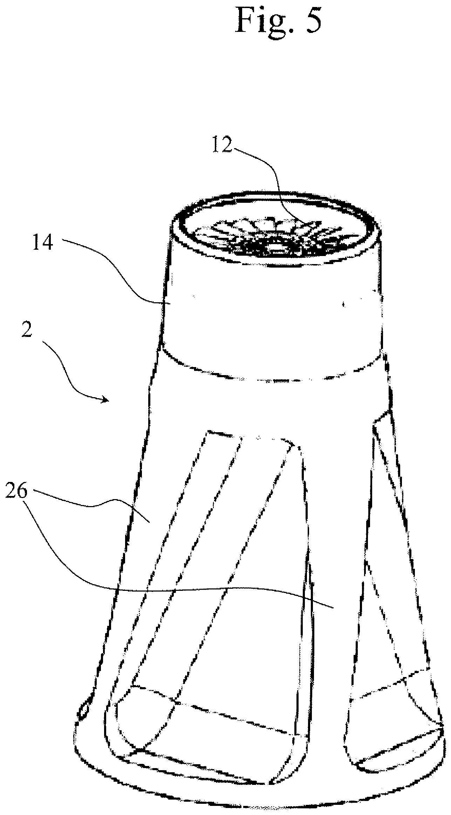

A perspective view of a preferred embodiment of the energy converting device 2 according to the invention can be seen in Fig. 5. It can be seen that the blade ring 14 is attached to the outer support members 26 that extend along the outer surface of the energy converting device 2. The energy converting device 2 is configured to be mounted on a roof - a roof of a domestic building by way of example. It is possible to mount the energy converting device 2 in an upright position as indicated in Fig. 2, 3 and 4. However, it would also be possible to modify the energy converting device 2 and arrange it horizontally.

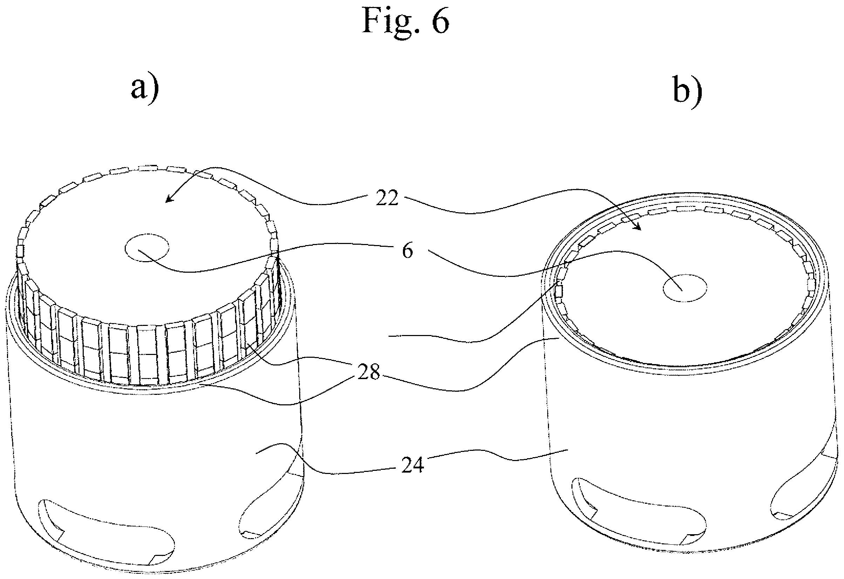

In Fig. 6a and Fig. 6b a central part of a preferred embodiment according to the invention the energy converting device 2 is illustrated. The central part is the means for changing the axial position of the electrically conducting wall 24 relative to the rotor 22. The axial position of the electrically conducting wall 24 determines degree of magnetic induction generated by the rotation of the permanent magnets 28. Thus, the axial position of the electrically conducting wall 24 determines the generated resistance by generation of eddy currents. Accordingly, by changing the axial position of the electrically conducting wall 24 relative to the rotor 22 it is possible to control the mechanical resistance and hereby the rotational speed of the rotor 22.

In Fig. 6a the electrically conducting wall 24 has been displaced relative to the rotor 22 so that the generated resistance by generation of eddy currents is reduced. In Fig. 6b the electrically conducting wall 24 encloses the entire rotor 22 and thus generated resistance by generation of eddy currents is maximal.

It is possible to achieve a low start moment of the energy converting device 2 so that it would be very easy to start up. Moreover, heat can be produced at low wind velocity and furthermore, it is possible to keep the rotational speed inside a desired range and the level of noise made by the energy converting device 2 can be reduced because the speed of the windmill can be reduced by increasing the resistance of the stator. In combination with appropriate pitch regulating means it would be possible to control the speed of the rotor 22 in a specific range e.g. 20-40 rpm.

The rotational speed of the rotor 6 can be regulated by displacing the electrically conducting wall 24 relative to the rotor 22. The rotational speed of the rotor 6 can, however; also be regulated by using the pitch regulation explained with reference to Fig. 1 and Fig. 2.

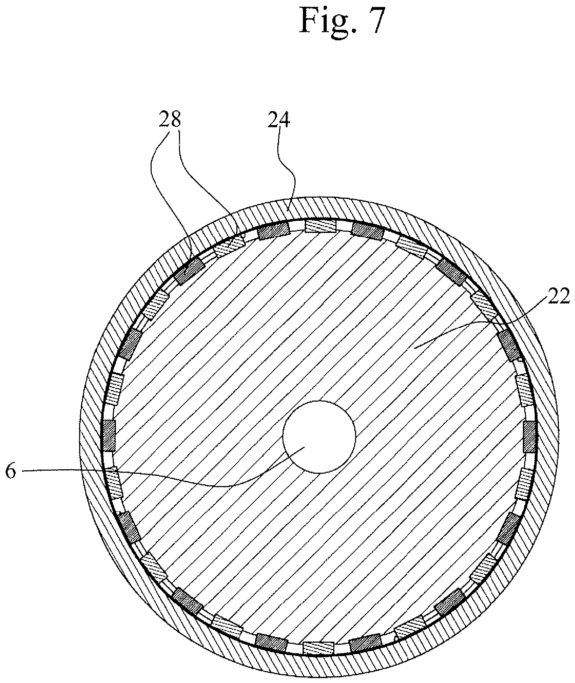

Fig. 7 illustrates a schematically top view of a rotor 22 enclosed by an electrically conducting wall 24. The rotor 22 comprises a number of permanent magnets 28 that are evenly arranged along the outer periphery of the rotor 22.

## Claims

1. Windmill driven energy converting device (2) comprising a number of wind blades (12) attached to a shaft (6) that is connected to:
a rotor (22) with permanent magnets (28), which rotor (22) is arranged inside or outside a stator having an electrically conducting wall (24) that is configured to be subjected to magnetic induction generated by the rotation of the permanent magnets (28) and thus configured to generate heat through generation of eddy currents and a heat exchanger comprising a heat-carrying media (e.g. a fluid) configured to take up thermal energy from the conducting wall (24), and optionally
a generator
**characterised in that** the energy converting device (2) comprises means for changing the axial position of the electrically conducting wall (24) relative to the rotor (22) and that the energy converting device (2) comprises means for regulating the pitch of the blades (12), where the regulation of the pitch of each blade (12) is accomplished by:
- using at least one spring member (32) arranged in a chamber (31) provided in the hub (3) to provide a force towards a force transferring member (34) configured to transfer force from the spring member (32) to an eccentric member (40) that is mechanically connected to the blade shaft (44) of the blade (12) and configured to press the force transferring member (34) towards the at least one spring member (32) and that the eccentric member (40) is configured to rotate about longitudinal axis of the blade shaft (44) so that the wind induced forces that acts on the blade causes the blade to pitch in a manner that causes the eccentric member (40) to push against and move the force transferring member (34) towards the at least one spring member (32);
- using electrical means configured to provide a force that causes that the blade (12) is pitched or
- using a hydraulic means configured to provide a force that causes that the blade (12) is pitched
- where the means for regulating the pitch of the blades (12) consists of an eccentric member (40) having a basically arced and conical geometry that secures a smooth movement of the force transferring member (34) when the blades (12) are pitched and the eccentric member (40) accordingly is turned and moves the force transferring member (34).

2. Windmill driven energy converting device (2) according to claim 1 **characterised in that** the means for regulating the pitch of the blades (12) consists of an oil pump configured to generate a hydraulic pressure that regulates pitch of the blades (12) on the basis of at least one preselected and measured parameter.

3. Windmill driven energy converting device (2) according to claim 1 **characterised in that** means for regulating the pitch of the blades (12) consists of an electrical actuator configured to pitch the blades (12) on the basis of at least one preselected and measured parameter.

4. Windmill driven energy converting device (2) according to one of the preceding claims **characterised in that** the windmill driven energy converting device (2) comprises a rotatable mounted wind guide (4) that is configured to change its orientation according to the wind direction and that wind guide is configured to guide the wind from a first direction (H) being basically perpendicular to the longitudinal axis of the shaft (6) to a second direction (V) being basically parallel to the longitudinal axis of the shaft (6).

5. Windmill driven energy converting device (2) according to one of the preceding claims **characterised in that** Aᵢ/Aₒ is greater than 2, preferable Aᵢ/Aₒ is greater than 2 and less than 5.

6. Windmill driven energy converting device (2) according to one of the preceding claims **characterised in that** the blades (12) are fixed to the inner side of a blade ring (14).

7. Windmill driven energy converting device (2) according to one of the preceding claims **characterised in that** a gear is arranged in the heat-carrying fluid of the heat exchanger.

8. Windmill driven energy converting device (2) according to one of the preceding claims **characterised in that** the blades (12) are fixed to the inner side of a blade ring (14) and that the energy converting device (2) comprises outer support members (26) extending along the outer side of the energy converting device (2) and that the blade ring (14) is fixed to the outer support members (26).

9. Windmill driven energy converting device (2) according to one of the preceding claims **characterised in** the spring member (32) is configured to move and provide a force along a line being parallel to the shaft (6) of the energy converting device (2).

## Patentansprüche

1. Windradbetriebene Energieumwandlungsvorrichtung (2) umfassend eine Anzahl von Windradschaufeln (12), die an einer Welle (6) angebracht sind, die verbunden ist mit:
einem Rotor (22) mit Permanentmagneten (28), wobei der Rotor (22) innerhalb oder außerhalb eines Stators mit einer elektrisch leitenden Wand (24) angeordnet ist, die dazu ausgebildet ist, einer magnetischen Induktion unterworfen zu werden, die durch die Drehung der Permanentmagnete (28) erzeugt wird, und somit ausgebildet ist, um Wärme durch die Erzeugung von Wirbelströmen zu erzeugen, sowie einen Wärmetauscher umfassend ein wärmeleitendes Medium (z. B. ein Fluid), das dazu ausgebildet ist, thermische Energie von der stromleitenden Wand (24) aufzunehmen, und optional
einen Generator;
**dadurch gekennzeichnet, dass** die Energieumwandlungsvorrichtung (2) Mittel zum Verändern der axialen Stellung der elektrisch leitenden Wand (24) relativ zu dem Rotor (22) umfasst, und dass die Energieumwandlungsvorrichtung (2) Mittel zur Pitchregelung der Schaufeln (12) umfasst, wobei die Pitchregelung jeder Schaufel (12) erzielt wird durch:
- Verwendung zumindest eines Federelements (32), das in einer in der Nabe (3) vorgesehenen Kammer (31) angeordnet ist, um eine Kraft auf ein Kraftübertragungselement (34) bereitzustellen, das dazu ausgestaltet ist, Kraft von dem Federelement (32) auf ein Exzenterelement (40) zu übertragen, das mechanisch mit der Schaufelwelle (44) der Schaufel (12) verbunden und dazu ausgestaltet ist, das Kraftübertragungselement (34) zu dem zumindest einen Federelement (32) hin zu drücken, und dass das Exzenterelement (40) dazu ausgestaltet ist, sich um die Längsachse der Schaufelwelle (44) zu drehen, so dass die windinduzierten Kräfte, die auf die Schaufel wirken, die Schaufel veranlassen, den Pitch auf eine Weise zu verändern, die das Exzenterelement (40) veranlasst, gegen das Kraftübertragungselement (34) zu drücken und es zu dem zumindest einen Federelement hin zu bewegen,
- Verwendung elektrischer Mittel, die dazu ausgestaltet sind, eine Kraft bereitzustellen, die verursacht, dass die Schaufel (12) gepitcht wird, oder
- Verwendung eines hydraulischen Mittels, dass dazu ausgestaltet ist, eine Kraft bereitzustellen, die verursacht, dass die Schaufel (12) gepitcht wird,
- wobei die Mittel zur Pitchregelung der Schaufeln (12) aus einem Exzenterelement (40) mit einer im Prinzip gekrümmten und konischen Geometrie bestehen, die eine gleichmäßige Bewegung des Kraftübertragungselements (34) sichert, wenn die Schaufeln (12) gepitcht werden, und das Exzenterelement (40) entsprechend gedreht wird und das Kraftübertragungselement (34) bewegt.

2. Windradbetriebene Energieumwandlungsvorrichtung (2) nach Anspruch 1 **dadurch gekennzeichnet, dass** die Mittel zur Pitchregelung der Schaufeln (12) aus einer Ölpumpe bestehen, die dazu ausgestaltet ist, einen Hydraulikdruck zu erzeugen, der den Pitch der Schaufeln (12) auf der Grundlage zumindest eines vorgewählten und gemessenen Parameters regelt.

3. Windradbetriebene Energieumwandlungsvorrichtung (2) nach Anspruch 1, **dadurch gekennzeichnet, dass** die Mittel zur Pitchregelung der Schaufeln (12) aus einem elektrischen Stellglied bestehen, das dazu ausgestaltet ist, den Pitch der Schaufeln (12) auf der Grundlage zumindest eines vorgewählten und gemessenen Parameters zu regeln.

4. Windradbetriebene Energieumwandlungsvorrichtung (2) nach einem der vorhergehenden Ansprüche, **dadurch gekennzeichnet, dass** die windradbetriebene Energieumwandlungsvorrichtung (2) eine drehbar montierte Windführung (4) umfasst, die dazu ausgestaltet ist, ihre Orientierung in Übereinstimmung mit der Windrichtung zu ändern, und wobei die Windführung dazu ausgestaltet ist, den Wind von einer ersten Richtung (H), die im Prinzip senkrecht auf die Längsachse der Welle (6) steht, auf eine zweite Richtung (V) umzuleiten, die im Prinzip parallel zu der Längsachse der Welle (6) ist.

5. Windradbetriebene Energieumwandlungsvorrichtung (2) nach einem der vorhergehenden Ansprüche, **dadurch gekennzeichnet, dass** Aᵢ/Aₒ größer als 0 ist, und Aᵢ/Aₒ vorzugsweise größer als 2 und kleiner als 5 ist.

6. Windradbetriebene Energieumwandlungsvorrichtung (2) nach einem der vorhergehenden Ansprüche, **dadurch gekennzeichnet, dass** die Schaufeln (12) an der Innenseite eines Schaufelrings (14) fixiert sind.

7. Windradbetriebene Energieumwandlungsvorrichtung (2) nach einem der vorhergehenden Ansprüche, **dadurch gekennzeichnet, dass** ein Zahnrad in dem wärmeführenden Fluid des Wärmetauschers angeordnet ist.

8. Windradbetriebene Energieumwandlungsvorrichtung (2) nach einem der vorhergehenden Ansprüche, **dadurch gekennzeichnet, dass** die Schaufeln (12) an der Innenseite eines Schaufelrings (14) fixiert sind, und dass die Energieumwandlungsvorrichtung (2) äußere Stützelemente (26) umfasst, die sich entlang der Außenseite der Energieumwandlungsvorrichtung (2) erstrecken, und dass der Schaufelring (14) an den äußeren Stützelementen (26) fixiert ist.

9. Windradbetriebene Energieumwandlungsvorrichtung (2) nach einem der vorhergehenden Ansprüche, **dadurch gekennzeichnet, dass** das Federelement (32) dazu ausgestaltet ist, sich zu bewegen und eine Kraft entlang einer Linie parallel zu der Welle (6) der Energieumwandlungsvorrichtung (2) bereitzustellen.

## Revendications

1. Dispositif de conversion d'énergie (2) entraîné par éolienne comprenant un certain nombre d'aubes (12) attachées à un arbre (6) qui est relié:
à un rotor (22) avec des aimants permanents (28), lequel rotor (22) est agencé à l'intérieur ou à l'extérieur d'un stator ayant une paroi électriquement conductrice (24) qui est configurée pour être soumise à une induction magnétique générée par la rotation des aimants permanents (28) et donc configurée pour générer de la chaleur à travers la génération de courants de Foucault et un échangeur de chaleur comprenant des agents de transfert de chaleur (par exemple un fluide) configurés pour absorber de l'énergie thermique à partir de la paroi conductrice (24), et éventuellement
à un générateur
**caractérisé en ce que** le dispositif de conversion d'énergie (2) comprend un moyen pour changer la position axiale de la paroi électriquement conductrice (24) par rapport au rotor (22) et **en ce que** le dispositif de conversion d'énergie (2) comprend un moyen pour réguler le pas des aubes (12), où la régulation du pas de chaque aube (12) est réalisée :
- par l'utilisation d'au moins un élément de ressort (32) agencé dans une chambre (31) prévue dans le moyeu (3) pour fournir une force à un élément de transfert de force (34) configuré pour transférer une force de l'élément de ressort (32) à un élément excentrique (40) qui est relié mécaniquement à l'arbre d'aube (44) de l'aube (12) et configuré pour presser l'élément de transfert de force (34) vers l'au moins un élément de ressort (32) et **en ce que** l'élément excentrique (40) est configuré pour tourner autour d'un axe longitudinal de l'arbre d'aube (44) de sorte que les forces induites par le vent qui agit sur l'aube amènent l'aube à s'incliner de manière à amener l'élément excentrique (40) à exercer une pression contre l'au moins un élément de ressort (32) et déplacer l'élément de transfert de force (34) vers celui-ci ;
- par l'utilisation de moyen électrique configuré pour fournir une force qui provoque l'inclinaison de l'aube (12) ou
- par l'utilisation de moyen hydraulique configuré pour fournir une force qui provoque l'inclinaison de l'aube (12)
- où le moyen de régulation du pas des aubes (12) est constitué d'un élément excentrique (40) ayant une géométrie essentiellement arquée et conique qui assure un mouvement régulier de l'élément de transfert de force (34) lorsque les aubes (12) sont inclinées et l'élément excentrique (40) est, en conséquence, tourné et déplace l'élément de transfert de force (34).

2. Dispositif de conversion d'énergie (2) entraîné par éolienne selon la revendication 1, **caractérisé en ce que** le moyen de régulation du pas des aubes (12) est constitué d'une pompe à huile configurée pour générer une pression hydraulique qui régule le pas des aubes (12) sur la base d'au moins un paramètre présélectionné et mesuré.

3. Dispositif de conversion d'énergie (2) entraîné par éolienne selon la revendication 1, **caractérisé en ce que** le moyen de régulation du pas des aubes (12) est constitué d'un actionneur électrique configuré pour incliner les aubes (12) sur la base d'au moins un paramètre présélectionné et mesuré.

4. Dispositif de conversion d'énergie (2) entraîné par éolienne selon l'une des revendications précédentes, **caractérisé en ce que** le dispositif de conversion d'énergie (2) entraîné par éolienne comprend un guide-vent monté rotatif (4) qui est configuré pour changer son orientation selon la direction du vent et **en ce que** le guide-vent est configuré pour guider le vent d'une première direction (H) étant essentiellement perpendiculaire à l'axe longitudinal de l'arbre (6) à une deuxième direction (V) étant essentiellement parallèle à l'axe longitudinal de l'arbre (6).

5. Dispositif de conversion d'énergie (2) entraîné par éolienne selon l'une des revendications précédentes, **caractérisé en ce que** A_{i/}A₀ est supérieur à 2, de préférence A_{i/}A₀ est supérieur à 2 et inférieur à 5.

6. Dispositif de conversion d'énergie (2) entraîné par éolienne selon l'une des revendications précédentes, **caractérisé en ce que** les aubes (12) sont fixées au côté intérieur d'une bague (14) d'aube.

7. Dispositif de conversion d'énergie (2) entraîné par éolienne selon l'une des revendications précédentes, **caractérisé en ce qu'**un engrenage est agencé dans le fluide de transfert de chaleur de l'échangeur de chaleur.

8. Dispositif de conversion d'énergie (2) entraîné par éolienne selon l'une des revendications précédentes, **caractérisé en ce que** les aubes (12) sont fixées au côté intérieur d'une bague (14) d'aube et **en ce que** le dispositif de conversion d'énergie (2) comprend des éléments de support extérieurs (26) s'étendant le long du côté extérieur du dispositif de conversion d'énergie (2) et **en ce que** la bague (14) d'aube est fixée aux éléments de support extérieurs (26).

9. Dispositif de conversion d'énergie (2) entraîné par éolienne selon l'une des revendications précédentes, **caractérisé en ce que** l'élément de ressort (32) est configuré pour se déplacer et pour fournir une force le long d'une ligne étant parallèle à l'arbre (6) du dispositif de conversion d'énergie (2).
